# EUROPEAN PATENT APPLICATION

(11) **EP 4 488 062 A1**
(43) Date of publication of application: **08.01.2025**
(21) Application number: 24185550.1
(22) Date of filing: 28.06.2024
(51) Int. Cl.: B32B 18/00, C04B 35/573, C04B 35/80, C04B 41/00

(54) **METHOD FOR MAKING A COMPOSITE CERAMIC MATERIAL, COMPOSITE CERAMIC MATERIAL MADE BY SUCH A METHOD AND A MECHANICAL COMPONENT AT LEAST PARTIALLY CONSISTING OF SAID MATERIAL**

(30) Priority: 03.07.2023 IT 202300013791
(71) Applicant: Petroceramics S.p.A., 24040 Stezzano, Bergamo (IT)
(72) Inventor: VALLE, Massimiliano, 24040 Stezzano, BERGAMO (IT); DELLEDONNE, Lucia, 24040 Stezzano, BERGAMO (IT); CANTU', Michela, 24040 Stezzano, BERGAMO (IT); GIGANTE, Chiara, 24040 Stezzano, BERGAMO (IT)
(74) Representative: Zanettin, Gianluigi

(57) **Abstract**

The invention relates to a method for making a composite ceramic material, comprising the following operating steps: a) producing a green body from an aggregate of fibers, preferably carbon fibers, and a carbonaceous matrix; b) subjecting said green body to pyrolysis such as to produce a porous shaped body; c) optionally heat-treating said porous shaped body to cause at least partial graphitization of the carbon; d) infiltrating said porous shaped body with molten silicon, obtaining a body made of composite ceramic material. The composite ceramic body comprises one or more metals, selected from the group consisting of tin, zinc, iron, germanium, titanium, zirconium and manganese, and/or the compounds thereof, selected from the group consisting of carbides, silicides, borides, nitrides, MAXPhase. Said one or more metals and/or the compounds thereof are introduced: in step a) the production of the green body as additives to the fibers and to a resin that forms the carbonaceous matrix; and/or in the porous shaped body before step d) of infiltration with silicon by physical and chemical infiltration processes; and/or in step d) of infiltration with silicon mixed with molten silicon.

## Description

### FIELD OF APPLICATION

The subject matter of the present invention is a method for making a composite ceramic material, a composite material made by such a method and a mechanical component at least partially consisting of said material.

The composite ceramic material according to the invention has improved thermo-mechanical properties that make it particularly suitable for use both as a bulk material and as a coating in thermo-mechanical applications in the automotive (brake) and aerospace sectors where materials capable of working at very high temperatures in the presence of aggressive atmospheres are required.

### PRIOR ART

In applications where resistance to impact, compression and heat generated by friction is required, the use of composite ceramic materials is known in the art. Pure ceramic materials, given the intrinsic fragility thereof, cannot in fact ensure these features.

An interesting application is that of braking systems, in particular for the preparation of disks for disk brakes, or in the aerospace sector, the manufacture of rocket nozzles, thermal protection systems, leading edges for airfoils.

These composite ceramic materials are obtained starting from a mixture of materials which comprises fibers essentially consisting of carbon, aggregating resin, pitches and other additives and is subjected, in accordance with the prior art, to processing steps which are summarized below. The production method differs according to the type of fibrous support used: chopped fibers or long fibers.

In the case of chopped fiber materials, the fibers are mixed with an aggregating resin, pitches, and other additives, and the mixture thus obtained is then placed into a mold where it is formed with the aid of heating and the application of pressure, obtaining a shaped semi-finished product.

In the case of long fiber-based materials, the fibrous support may consist of unidirectional fibers, fabrics or prepregs (fibers that are pre-impregnated with a resin). The fibrous support is incorporated into a matrix comprising aggregating resin, pitches, and other additives. The combination thus obtained is then subjected to forming and heating, obtaining a shaped semi-finished product.

In both cases, the semi-finished product is then subjected to a first baking in an oven at a temperature such as to cause the carbonization or pyrolysis of the resin. As a result of such baking, the semi-finished product acquires a certain porosity due to the loss of volatile material at the temperatures of carbonization or pyrolysis. The baked semi-finished product is subsequently subjected to a second baking in the presence of silicon at a temperature such as to cause the melting of said silicon and the infiltration thereof into the pores of the aforesaid semi-finished product, according to a technique known as LSI (Liquid Silicon Infiltration).

The infiltration of silicon increases the cohesion of the carbon fibers; at the same time, molten silicon, under the conditions of the second baking, reacts partly with the carbon of the semi-finished product thereby forming silicon carbides which have the effect of improving the cohesion features of the material.

The composite ceramic materials thus obtained, while having in general good mechanical properties, are not entirely satisfactory in terms of wear resistance, thermal stability and resistance to thermal shocks. Also particularly problematic is the tendency for liquid silicon segregation during infiltration. At such segregations, due to the increase in volume of the silicon following the solidification thereof, internal tensions are present within the material that may trigger cracks.

Such issues are particularly acute in the production of brake disks, especially in relation to wear resistance and oxidation.

As is known, despite the excellent properties that the adoption of carbon-ceramic composite materials ensures in the development of brake disks, the coupling thereof with highly abrasive ceramic pads causes a rapid wear thereof.

In order to optimize the resistance to oxidation and/or modulate and optimize the friction coefficient, as well as to ensure a longer service life of carbon-ceramic brake disks, a variety of solutions involving the application of ceramic coatings to the braking surfaces of the disks have been developed and constitute the prior art.

For example, composite ceramic materials have been improved by coating them with a layer of silicates, carbides, silicon nitrides or pure silicon. In this way, surface oxidation phenomena of the material with a consequent carbon loss and the formation of surface cavities are avoided, phenomena which cause a change over time in the braking features of the system and, therefore, a decrease in the performance of the vehicle whereupon they are mounted (see, for example, the international application WO 03/056206). The application of a surface coating has also been proposed in order to optimize the tribological properties of the disks by adapting them for specific applications (see, for example, the international application WO2006/070418) or for the development of thermal barrier coatings (TBCs) in countless fields of application in the aerospace sector.

Said surface layer is commonly applied during the preform forming (molding) step. Two distinct mixtures of pastes are prepared (one for the central body of the disk; the other for the surface layer(s)) which are then deposited into a mold and hot-pressed. Alternatively, the molding is performed in two distinct steps, first forming the surface layers with the mixture and subsequently joining them with the central body of the disk during the molding step thereof. The result is a molded object with a structure with different layers that, after pyrolysis/carbonization and silicone bonding, becomes a disk with the carbon-ceramic body and ceramic layers on the braking surfaces.

In these types of solutions, the junction between the central body of the disk (carbon-ceramic layer) and the surface ceramic layers is first obtained during the forming step and is consolidated during the siliconization step when the molten silicon reacts with the carbon present in the central body of the disk and in the surface layers, forming a ceramic interface that welds together the two portions of materials.

The manufacture of multi-layer brake disks may also be obtained by forming the various layers separately and coupling them after the carbonization/pyrolysis and before infiltration with silicon/molten metal, possibly with the aid of a binder (see, for example, US patent US10,174,801 and the international application WO2012089788) .

Those solutions that already exist in the prior art in relation to the production of the surface coating layer, however, involve some critical issues and in particular: numerous steps preceding siliconization (formulation of the distinct compounds, formation of the layer, gluingg/co-molding with the disk body, mechanical processing); difficulty in applying the process to different disk formats insofar as the molding of layers with modified external or internal diameters and dedicated processing programs is required.

In general, going beyond the particular case of application in the production of brake disks, there is a great need to improve the features of composite ceramic materials in terms of:
- wear resistance;
- toughness;
- thermo-mechanical properties.

### DISCLOSURE OF THE INVENTION

The main object of the present invention is thus to eliminate or at least mitigate the drawbacks of the aforementioned prior art, by providing a method for making a composite ceramic material with improved features in terms of mechanical properties and/or thermal properties.

A further object of the present invention is to provide a method for making a composite ceramic material to lower the infiltration temperature with silicon.

A further object of the present invention is to provide a method for making a composite ceramic material that can reduce, if not eliminate, segregations of semi-metallic silicon.

A further object of the present invention is to provide a method for making a composite ceramic material which has a ceramic matrix that is compositionally homogeneous or deliberately graded such as to engineer the properties thereof.

### BRIEF DESCRIPTION OF THE DRAWINGS

The technical features of the invention, according to the aforementioned objectives, may be clearly seen in the content of the claims below, and the advantages thereof will become more readily apparent in the detailed description that follows, made with reference to the accompanying drawings, which represent one or more purely exemplifying and non-limiting embodiments thereof, wherein:
Fig. 1 shows, by means of a flow chart, an exemplary diagram of the method according to the invention in the particular case wherein the green body is made from short fibers;
- Fig. 2 shows, by means of a flow chart, an exemplary diagram of the method according to the invention in the particular case wherein the green body is made from long fibers;
- Fig. 3 shows, by means of a flow chart, an exemplary diagram of the method according to the invention in the particular case wherein the green body is made from prepreg;
- Fig. 4 shows, by means of a flow chart, an exemplary diagram of the method according to the invention in the particular case wherein tin is introduced in powder form during step a) of the production of the green body as an additive to the fibers aggregate and binder resin;
- Fig. 5, 6 and 7 are SEM images of a composite ceramic material obtained using the method according to the invention containing tin inside fractures as a filler, inside gaping chops, and at the interface between fibers and silicon carbide structures formed following infiltration with silicon, respectively;
- Fig. 8 shows the stress-strain curves of specimens bend-tested at three points, some specimens being free of tin and some specimens being made of material according to the invention supplemented with 6 and 10 wt.% of Sn;
- Fig. 9a is the Si-Sn phase diagram;
- Fig. 9b shows the trend of the % by weight of Si reacted as a function of the quantity of tin in the Si-C system;
- Fig. 9c and 9d are photographs of a crucible post-infiltration cycle at 1450°C with Si only and with Si+Sn, respectively;
- Fig. 10a, 10b and 10c show graphs of density, porosity and maximum flexural strength respectively as a function of the % by weight of tin present in C/SiC-based composite ceramic materials with Sn added according to the invention and infiltrated at different temperatures;
- Fig. 11 and 12 are diagrams of how the thermal diffusivity varies as a function of the graphitization temperature for a reference material and a composite ceramic material according to the invention with Fe as a catalyst;
- Fig. 13 shows, by means of a flow chart, an exemplary diagram of the method according to the invention in the particular case wherein iron and/or the compounds thereof are introduced into the porous shaped body before step d) of infiltration with silicon and before said optional step c) of heat treatment in the form of solutions through an impregnation process, preferably under vacuum;
- Fig. 14 shows the diffraction spectrum of one of the ceramic composite material samples according to the invention containing iron;
- Fig. 15, 16, 17 and 18 are SEM images showing different types of ceramic matrix obtained by infiltrating carbon fiber preforms with Si+Ti according to the invention;
- Fig. 19 and 20 show, by means of a flow chart, two exemplary diagrams of the method according to the invention wherewith a composite ceramic material is made which is reinforced respectively with short or long carbon fibers;
- Fig. 21 and 22 show, by means of a flow chart, two exemplary diagrams of the method according to the invention by which a coating is obtained in the composite ceramic material according to the invention on a short or long fiber preform, respectively;
- Fig. 23, 24, 25 and 26 are SEM images of coatings/coating layers obtained by co-molding with short fiber preforms, wherein a coating consists of Si-SiC only (Fig. 23 and 25) and a coating made according to the present invention containing Si-SiC and ZrB2 (Fig. 24 and 26) ;
- Fig. 27 is a process diagram for making protective coatings in composite ceramic materials according to the invention on preforms (mainly long fiber) that may find application in the aerospace field; and
- Fig. 28, 29 and 30 are SEM images of coatings/coating layers of a composite ceramic material according to the invention, wherein the image of Fig. 28 refers to the coating on a section made on a long fiber sample infiltrated with Si+Ti, while Fig. 29 and 30 refer to the surface of the coating.

Elements or parts of elements common to the embodiments described above will be indicated with the same numerical references.

### DETAILED DESCRIPTION

The present invention relates to a method for making a composite ceramic material.

According to a general embodiment of the invention, the method for making a composite ceramic material comprises the following operating steps:
a) producing a green body comprising fibers, preferably carbon fibers, and a carbonaceous matrix;
b)subjecting said green body to pyrolysis to produce a porous shaped body;
c) optionally subjecting said porous shaped body to heat treatment to cause at least partial graphitization of the carbon;
d) infiltrating said porous shaped body with molten silicon thereby obtaining a body made of composite ceramic material.

Preferably step d) of infiltrating said porous shaped body with molten silicon is carried out under vacuum.

In step a), the green body may be made in different ways depending upon the type of fibers used: short fibers or long fibers.

In the case of short fibers, the use of an aggregating resin (preferably phenolic) is required. The carbonaceous matrix is defined by said aggregating resin.

In the case of long fibers, a prepreg fabric (impregnated with preferably phenolic resin which defines the carbonaceous matrix) may be used, or a fibrous substrate obtained by the needling of two or more layers of long fibers. In the latter case, the fibrous substrate must be densified by means of the PIP or CVI technique; the carbonaceous matrix is defined by the carbonaceous material deposited by CVI or PIP.

Also in the other cases (short fibers and prepreg long fibers), the green bodies may then be further densified by PIP or CVI before the LSI process.

In particular, the green body may be made by forming, laminating, or winding.

According to the invention, the body made of composite ceramic material comprises one or more metals, selected from the group consisting of tin, zinc, iron, germanium, titanium, zirconium and manganese, and/or compounds thereof, selected from the group consisting of carbides, silicides, borides and nitrides, MAX Phase.

As will be taken up in greater detail later in the description, it was surprisingly possible to verify that the presence of said one or more metals and/or the compounds thereof:
- changes the morphology of the ceramic material and/or
- affects the pyrolysis process and/or
- influences the silicon infiltration process.

According to the invention, said one or more metals and/or the compounds thereof are introduced:
- in step a) of producing the green body as additives to the fibers and to a resin that forms the carbonaceous matrix; and/or
- in the porous shaped body before step d) of infiltration with silicon by physical and chemical infiltration processes; and/or
- in step d) of infiltration with silicon mixed with molten silicon.

Preferably, when said one or more metals and/or the compounds thereof are introduced in step a) of manufacturing the green body as additives to the fibers and resin, they are introduced in the form of powders.

Preferably, when said one or more metals and/or the compounds thereof are introduced into the porous shaped body before step d) of infiltration with silicon, they are introduced:
- in the form of solutions by means of an impregnation process; or
- as additives of a resin by means of a PIP process.

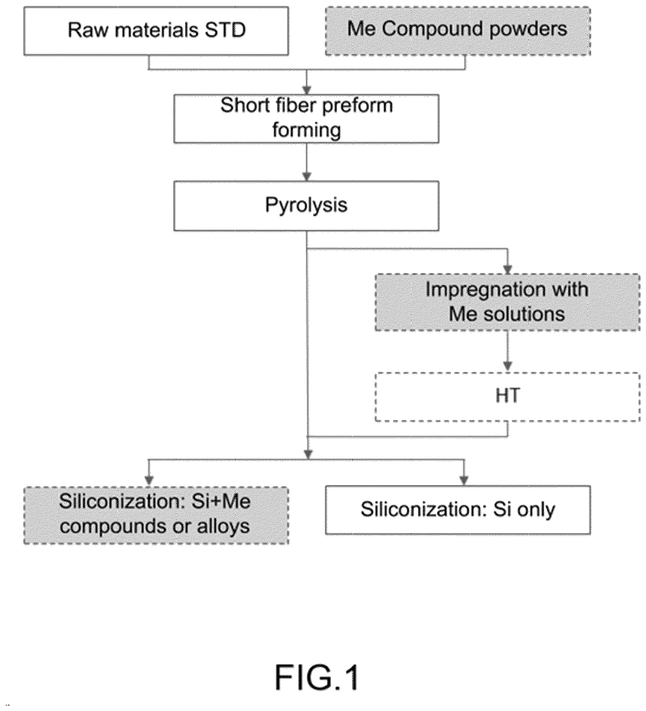

Preferably, as illustrated in the diagrams in Fig. 1, 2 and 3, in the case wherein said one or more metals and/or the compounds thereof are introduced into the porous shaped body before step d) of infiltration with silicon in the form of solutions using an impregnation process or as additives of a resin by means of a PIP process, the method comprises a heat treatment step HT. In particular, such heat treatment step HT is used to activate the function of said one or more metals and/or the compounds thereof introduced into the shaped body, for example to make the graphitization of the carbon present more effective in the case wherein the metals are introduced as additives of a resin through a PIP process.

The fibers may be short fibers or long fibers. Preferably, the short fibers are distributed within the green body in a random or predetermined orientation. Preferably, the long fibers are distributed within the green body as unidirectionally oriented filaments in the form of fabrics or incorporated in prepreg.

Fig. 1 shows, by means of a flow chart, an exemplary diagram of the method according to the invention in the particular case wherein the green body is made from short fibers. Such diagram includes the various options for introducing said one or more metals and/or the compounds thereof into the process. Graphically, the optional/alternative feature was rendered by plotting the edge of the optional blocks in the form of a dashed line. In such diagram, the optional step c) of heat treatment was indicated with HT.

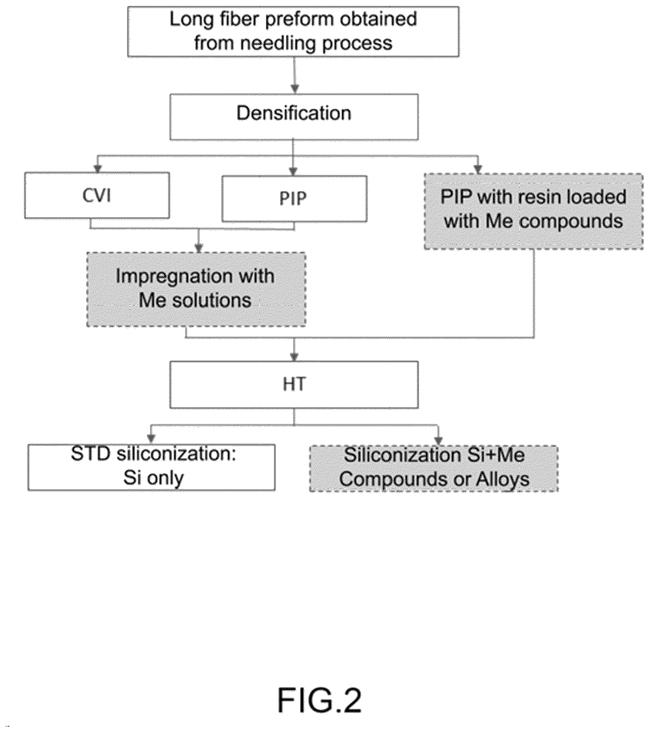

Fig. 2 shows, by means of a flow chart, an exemplary diagram of the method according to the invention in the particular case wherein the green body is made from long fibers. The various options for introducing said one or more metals and/or the compounds thereof into the process have also been included in this diagram. Graphically, the optional/alternative feature was rendered by plotting the edge of the optional blocks in the form of a dashed line. According to such diagram, step a) of green body production and step b) of pyrolysis were incorporated into the initial block called "Graphitized preform". In the specific case, in particular after the pyrolysis, a densification step was envisaged that may be performed by means of the CVI (Carbon Vapor Infiltration) technique, or by means of the PIP (Polymer Infiltration and Pyrolysis Process) technique or by means of PIP with a polymer loaded with metal additives (according to the invention).

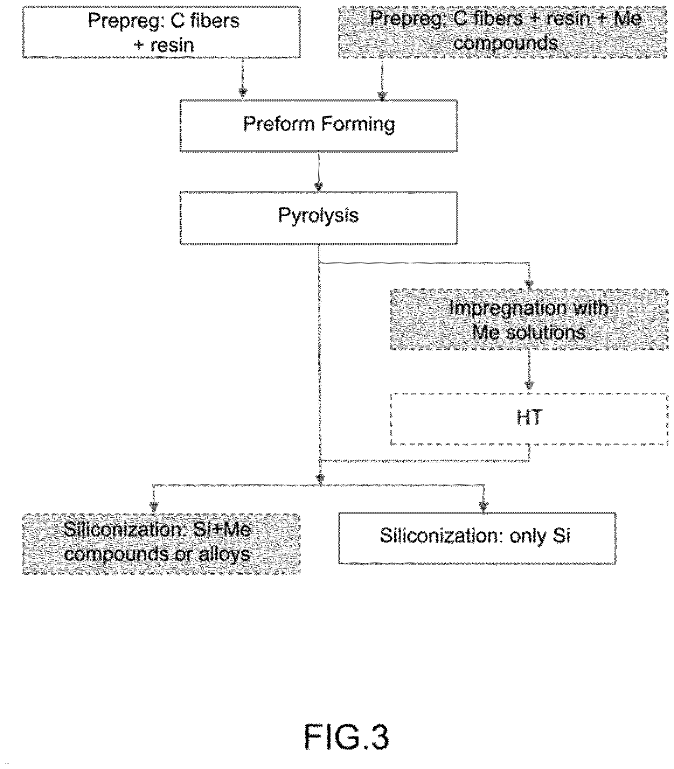

Fig. 3 shows, by means of a flow chart, an exemplary diagram of the method according to the invention in the particular case wherein the green body is made from prepreg. The various options for introducing said one or more metals and/or the compounds thereof into the process have also been included in this diagram. Graphically, the optional/alternative feature was rendered by plotting the edge of the optional blocks in the form of a dashed line.

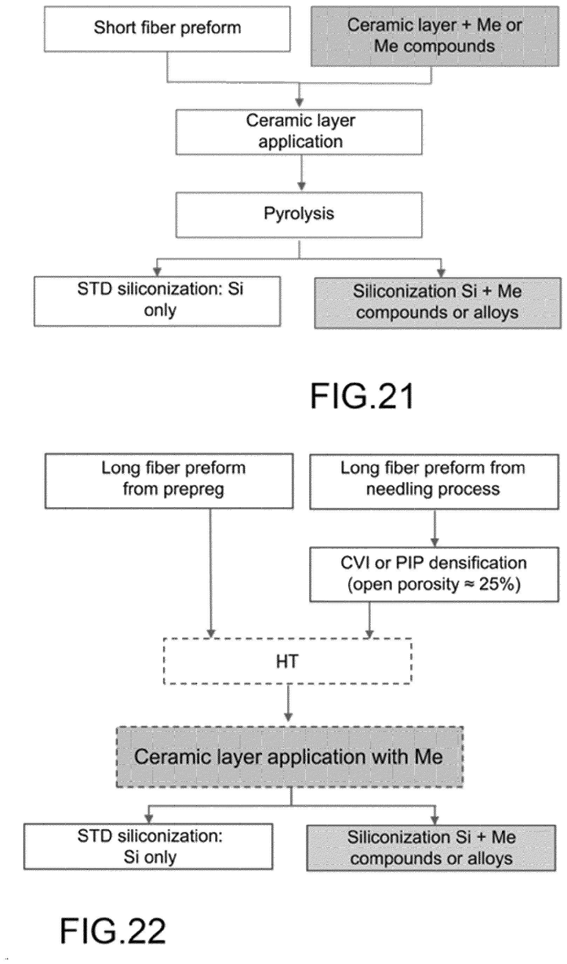

The method according to the invention may be used to make an entirely composite ceramic material body or to make a coating of such composite ceramic material on a manufactured product/preform of another material, preferably carbonaceous, as will be taken up later in the description with particular reference to the diagrams in Fig. 21 and 22.

In particular, the green body is made as a coating layer of a main body, preferably said fiber aggregate and said carbonaceous matrix.

The diagrams shown in Fig. 21 and 22 show two examples of a production process of a short fiber manufactured product/preform and a long fiber manufactured product/preform, respectively, wherein it is envisaged to equip the main body of the manufactured product/preform with a coating layer made of the composite ceramic material according to the invention.

According to a particularly preferred embodiment of the invention, the composite ceramic material body comprises tin.

It was surprisingly possible to verify that the addition of tin:
- results in an improvement in the mechanical properties of the composite ceramic material; and
- allows the infiltration temperature to be lowered with silicon.

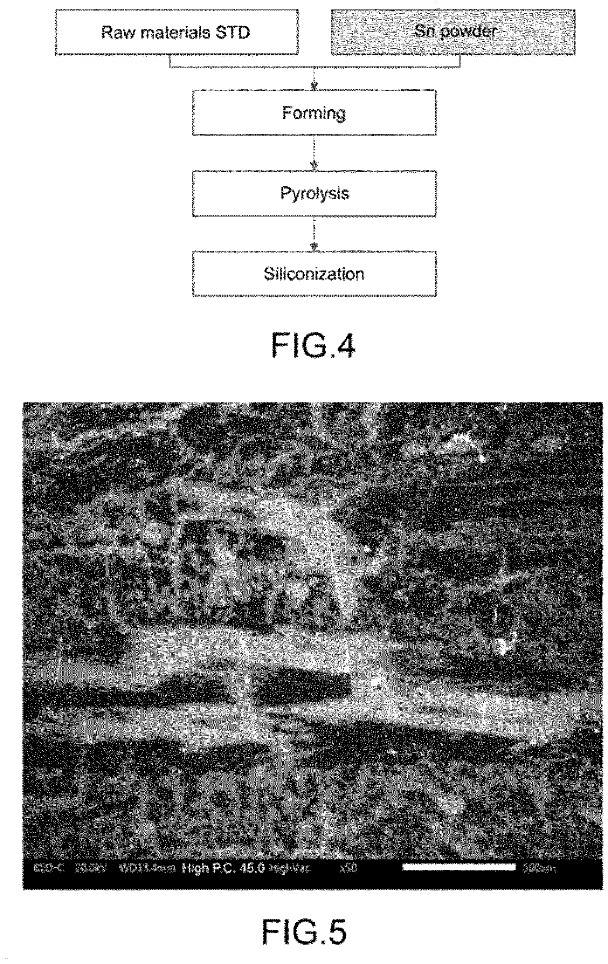

Preferably, as illustrated in the diagram in Fig. 4, tin is introduced in powder form in step a) of the green body production as an additive to the fiber aggregate and binder resin (indicated in the diagram as raw materials STD) .

Preferably, the content by weight of tin is less than 20% by weight of the total components used to produce said green body, more preferably between 2 and 8% by weight.

Preferably, the tin powders have a predefined particle size, chosen according to the microstructures to be obtained. It is possible to use tin powders having different particle sizes so as to obtain different microstructures. Preferably, the tin powders have a particle size of less than 2 mmm.

Preferably, the green body is made from short fibers, in particular of a length not exceeding 20 mm.

Advantageously, in the composite ceramic material obtained with the method according to the invention, the tin is in the metallic state and is not bound to carbon and silicon.

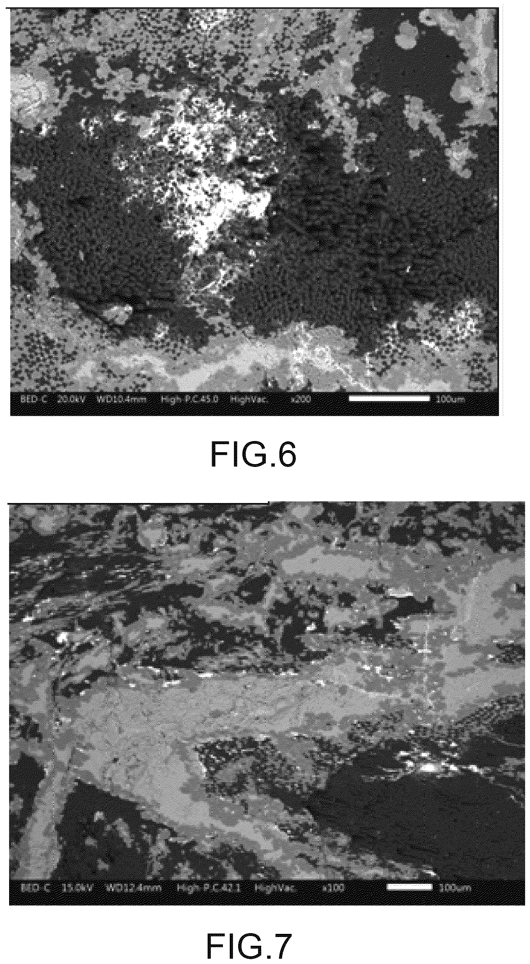

In particular, as illustrated in the SEM images shown in Fig. 5, 6, and 7, tin is present in the composite ceramic material:
- inside fractures as a filler (see Fig. 5); and/or
- inside gaping chops, i.e., non-compacted chops (see Fig. 6); and/or
- at the interface between fibers and structures of silicon carbide formed as a result of infiltration with silicon (see Fig. 7).

Positioning the metal in these positions results in an increase in the mechanical properties of the composite, as it was possible to verify by subjecting three sample points of the same ceramic material to bending tests, wherein some thereof contain tin (introduced according to the method of the invention) and others are without tin.

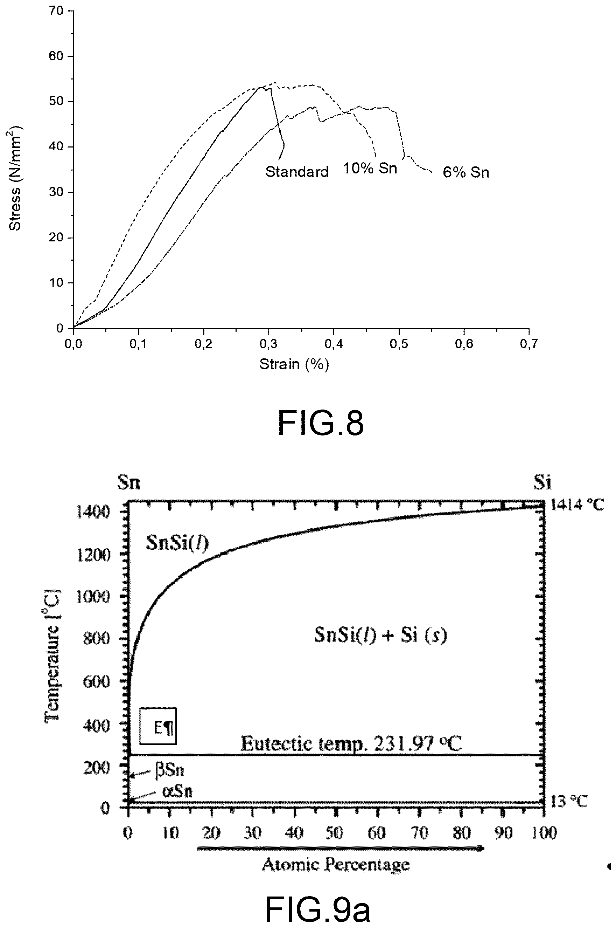

The graph in Fig. 8 shows the stress-strain curves of samples that were bend-tested at three points. Reference samples without tin and test samples supplemented with 6 and 10 wt.% of Sn are proposed for comparison. An increase in post-fracture toughness is observed for the same MOR in both samples containing tin.

Without wishing to be bound to this theory, a possible explanation for that which has been observed in terms of improving the mechanical properties is linked to the fact that tin does not react with C and with Si. It follows that tin establishes a weak interface that facilitates the pull-out of the fibers, compared to a stronger interface given by silicon carbide.

It was also possible to verify that the presence of Sn favors the fusion of silicon at lower temperatures and therefore allows infiltrations at lower T than the standard ones (1500°C).

More specifically, as illustrated in the Si-Sn phase diagram in Fig. 9a, the Si-Sn system has an eutectic (E) that allows Si to melt at temperatures below the melting temperature thereof.

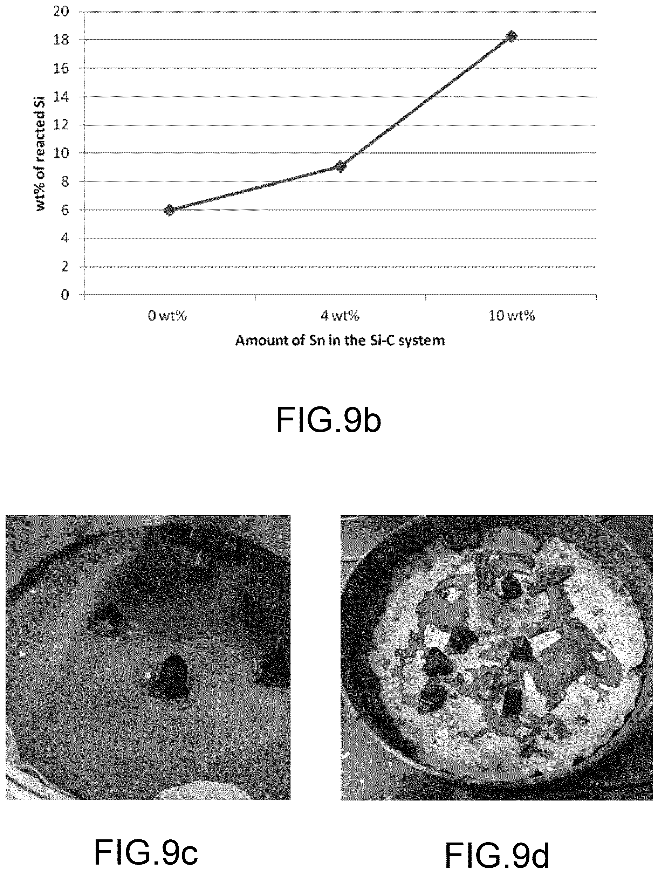

Under the same conditions (T 1365°C, pressure (0.3 bar N2) and amount of Si and Carbon in the system), the compositional systems with the highest Sn content also show the greatest fraction of Si reacted with the carbon to form SiC, as may be seen in the graph in Fig. 9b.

It has been experimentally verified that at 1450°C under vacuum, pure Si in the crucible does not melt to such an extent as to be able to infiltrate the carbonaceous preform. Conversely, under the same conditions, in the presence of Sn, the Si-Sn alloy melts and allows Si to infiltrate the carbonaceous preform. Fig. 9c and 9d show photographs of a crucible after infiltration cycle at 1450°C respectively with Si only and with Si+Sn, from which it may be observed that in the case of pure Si there was no fusion and infiltration of the porous preform.

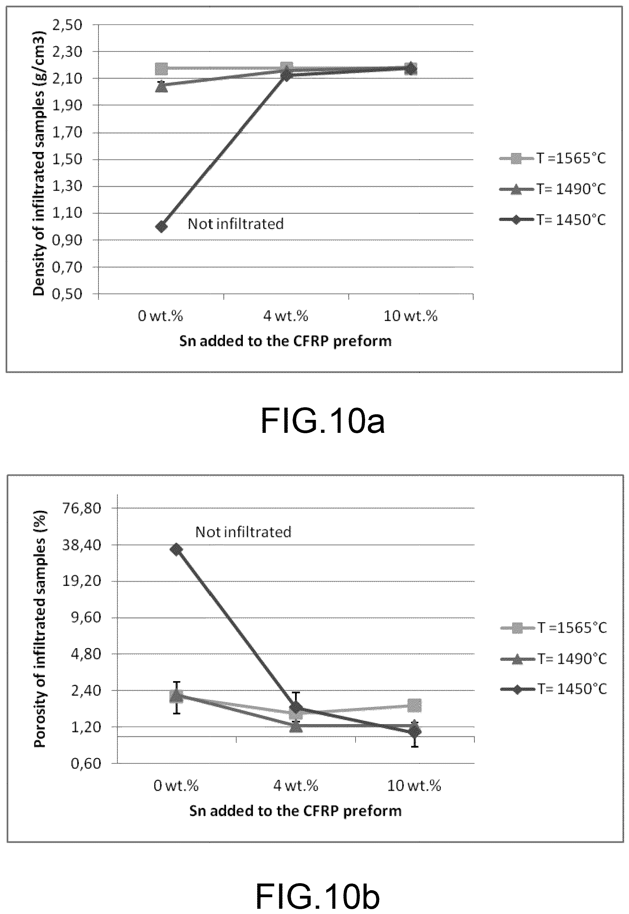

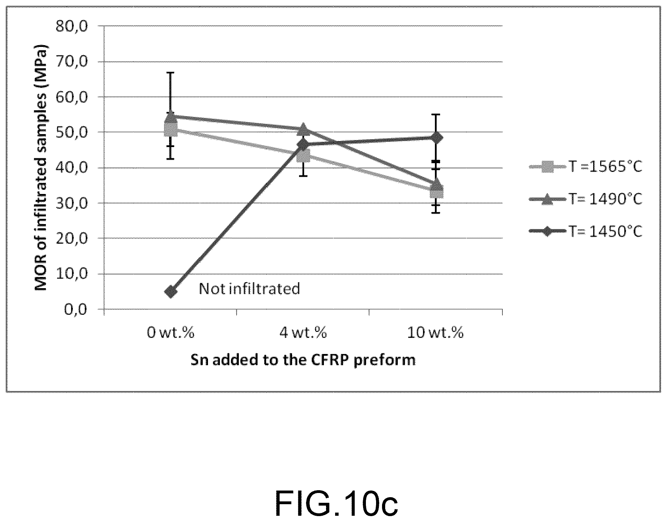

The C/SiC-based composite ceramic materials supplemented with Sn according to the invention may be obtained by complete infiltration (under vacuum) at a T close to the silicon melting T (1450°C) and still show density, porosity and maximum flexural resistance values comparable to those shown by standard C/SiC samples, infiltrated with Si at T equal to 1565°C, as may be seen from the graphs in Fig. 10a, 10b and 10c.

Preferably, in step d) of infiltration with molten silicon, said porous shaped body is infiltrated with molten silicon at a temperature lower than 1500°C, more preferably not lower than 1450°C.

Advantageously, step d) of infiltration with molten silicon is conducted under vacuum.

### EXEMPLARY EMBODIMENTS

Following the process diagram in Fig. 4, samples were made of a ceramic composite reinforced with short carbon fibers (chops) using resin (phenolic resin powder) and tin powder with a particle size of less than 2 mm. In all samples the tin content was kept below 20 wt.% of the raw materials used, in particular between 2-8 wt.%.

Homogeneously dispersed powders and fibers were heat pressed unidirectionally (pressures of 30-50 MPa, and temperature 150°C). Subsequently, the preform underwent thermal treatments of pyrolysis (T=900°C in nitrogen) and liquid silicon infiltration.

The ceramic composites thus obtained after siliconization had densities of between 2.15 and 2.30 g/cm3 and an open porosity of less than 2%.

The SEM images of Fig. 5 - 7, the stress-strain curves of Fig. 8 and the graphs of Fig. 9b and 10a, b and c refer to samples of the composite ceramic material obtained as described above.

According to a further particularly preferred embodiment of the invention, the composite ceramic body comprises iron and/or the compounds thereof.

It was possible to verify that iron surprisingly acts as a catalyzing agent for graphitization.

The presence of Fe increases the graphitization of the carbon (fibers and carbonaceous matrix) of the ceramic composite.

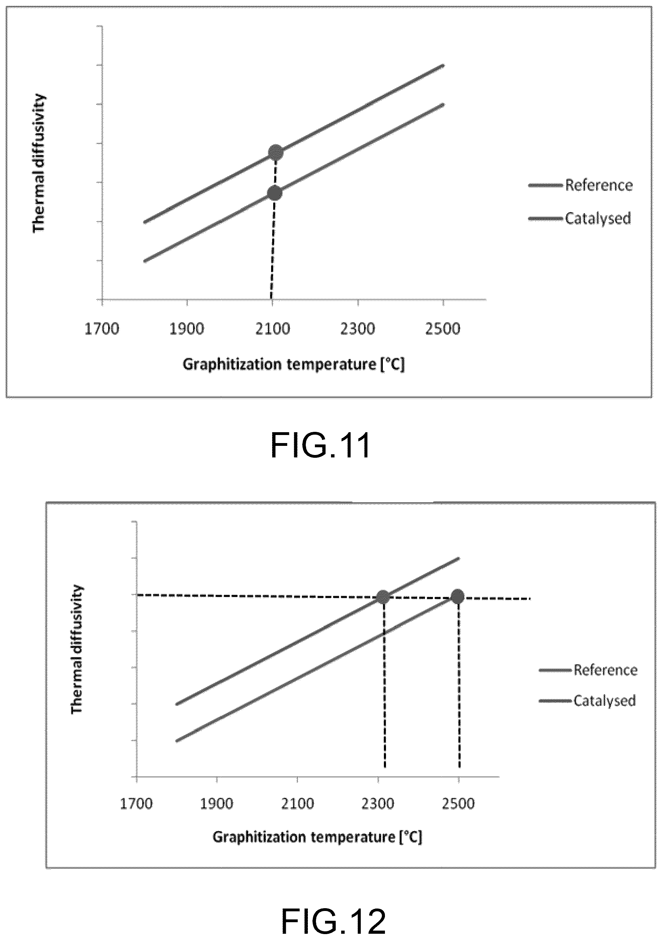

The thermo-mechanical properties of the ceramic composite are a function of the graphitization temperature. Fig. 11 and 12 show diagrams of how the thermal diffusivity varies as a function of the graphitization temperature for a reference material (blue) and using a catalyst such as Fe.

With the use of a graphitization catalyst, it is possible, at the same graphitization temperature, to obtain higher thermal properties (graph in Fig. 11), or to obtain the same properties in performing thermal graphitization process at lower temperature (graph in Fig. 12).

Similar graphs, but with the opposite trend, may be obtained for the mechanical strength properties. In fact, the mechanical strength decreases with the graphitization temperature.

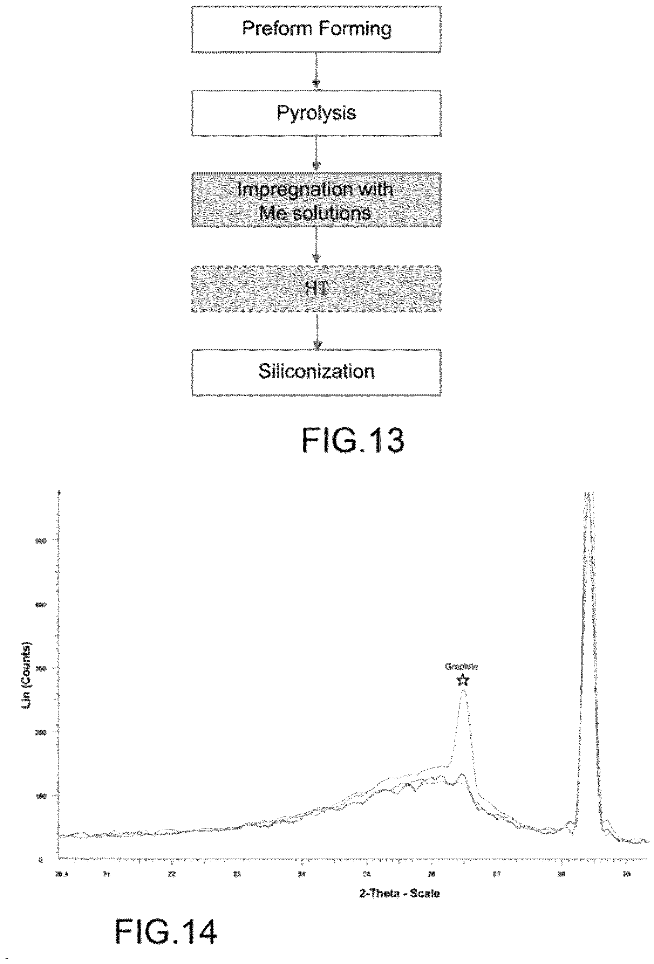

Preferably, as illustrated in the diagram in Fig. 13, iron and/or the compounds thereof are introduced into the porous shaped body before step d) of infiltration with silicon and before said optional heat treatment step c):
- in the form of solutions by means of an impregnation process, preferably under vacuum as shown in Fig. 13); or
- as additives of a resin by means of a PIP process, preferably under vacuum.

Preferably, the content by weight of iron and/or the compounds thereof is comprised between 1 and 20% by weight of the total ceramic composite material.

### EXEMPLARY EMBODIMENTS

Following the process diagram in Fig. 13, samples were made of a ceramic composite reinforced with short or long carbon fibers.

Once the carbon preform (long or short fiber; phenolic aggregating resin) was made and the pyrolysis treatment was performed at 900°C, an impregnation was performed with Fe-based compounds (e.g., ferrocene and/or metal iron). In particular, the impregnation was performed using a 2 wt.% ethanol solution loaded with ferrocene. To promote impregnation of the preform, the process was performed under vacuum.

To activate the graphitization process, a heat treatment HT was performed at a temperature above 2000°C and subsequent infiltration by the liquid silicon. In all the samples obtained, the content by weight of iron and/or the compounds thereof is comprised between 1 and 20% by weight of the total ceramic composite material.

The graphitization was confirmed by the XRD analysis, which shows in Fig. 14 the diffraction spectrum of one of the samples where the graphite peak may be observed.

According to a further particularly preferred embodiment of the invention, the composite ceramic body comprises iron.

The introduction of iron allows the formation of a ceramic matrix containing the FeSi2, FeSi, or other Fe-Si compounds depending upon the introduced percentage of iron by weight.

Preferably, iron is introduced into the porous shaped body (green body) during step d) of infiltration with silicon mixed with molten silicon or during step a) of the production of the green body as an additive to the fiber aggregate and binder resin. It is also possible to confine the presence of said metal only in the protective outer coating of the preform, by introducing iron powder during one of the steps of applying the layer to the carbonaceous body.

Preferably, the mixture of molten silicon and iron used in step d) has the following composition: 40-95% by weight of Si and 5-60% by weight of Fe.

Pref erably, the Fe in the green body or in a part thereof, introduced during step a) of the production of the green body, is inserted to an extent of less than 20% by weight.

Preferably, the iron powders have a predefined particle size, chosen according to the microstructures to be obtained. It is possible to use iron powders having different particle sizes such as to obtain different microstructures and/or different compositional clusterizations. Preferably, the iron powders have a particle size of less than 2 mm.

The advantage of this solution, in which the protective coating contains iron, is to have a tribologically more suitable surface for working with the usual friction materials.

### EXEMPLARY EMBODIMENTS

Following the process diagrams of Fig. 21 and 22, samples were made of a ceramic composite reinforced with short or long carbon fibers, with an external protective coating containing Fe. The carbon preform was then infiltrated with Si or Si + Fe.

In the case of using short fibers, once the carbon preform (short fiber; phenolic aggregating resin) has been made, the protective layer containing Fe is applied before or after the pyrolysis process at 900°C. Infiltration with Si or Si+Fe is subsequently performed at a temperature comprised between 1500 and 1700°C.

In the case of using long fibers, the carbon preform may be prepared starting from a prepreg fabric or from a fibrous substrate obtained by needling two or more layers of long fibers.

In the first case, the prepreg fabric (being already impregnated with resin) may not be subjected to densification, but may be subjected directly to pyrolysis at 900°C.

In the second case in which the fibrous substrate is obtained by needling (not already being impregnated with resin), densification was performed by means of a CVI or PIP technique, followed by pyrolysis at 900°C such as to obtain a long carbonized fiber preform.

In both cases the carbonized preform may optionally be subjected to a heat treatment HT (at a temperature greater than 2000°C and with a period of time greater than 5 min).

A protective layer containing Fe is applied to the preforms.

In both cases, infiltration with Si or Si+Fe at a temperature of between 1500 and 1700°C is finally performed.

In this way a well infiltrated material is obtained, with a residual porosity of less than 3%, and with improved tribological properties.

According to a further particularly preferred embodiment of the invention, the composite ceramic material body comprises titanium.

The introduction of titanium allows for the formation of a ceramic matrix containing the max phase of Si and Ti (Ti3SiC2) and that is substantially free of silicon segregations.

In particular, titanium is present in the ceramic matrix of the composite ceramic material in the form of TiSi2, Ti3SiC2 and TiC.

Advantageously, the ceramic matrix of the composite ceramic material comprises SiC, TiSi2, Ti3SiC2 and TiC and is substantially free of silicon segregations.

Preferably, titanium is introduced into the porous shaped body during step d) of infiltration with silicon mixed with molten silicon.

Preferably, the mixture of molten silicon and titanium used in step d) has the following composition: 35-95% by weight of Si, 5-50% by weight of Ti and 0-40% by weight of C.

As known from literature data, the insertion of Ti into the Si-C system allows obtaining a ceramic matrix consisting of SiC, TiSi2, Ti3SiC2, TiC and Si. A peculiarity of the Si-C-Ti system is the chemical evolution of the infiltrating liquid during the penetration path, which results in a graded ceramic matrix.

In contrast to that which has been reported in the literature, where Ti is inserted by impregnation with a TiC slurry of the carbon fiber preform or by insertion of TiC powders directly into the preform, according to the invention, as already described, Ti is inserted into ceramic composites by infiltration using a Si+Ti+C liquid.

The mineralogical composition of the ceramic matrix is strictly dependent upon the amount of Ti present in the infiltrating liquid.

Contrary to the prior art techniques, the method according to the invention (Si+Ti+C infiltration) allows obtaining a compositionally homogeneous ceramic matrix (i.e. with variations in the thickness of the material of less than 1.5-2% on the single phase), free of residual silicon and with a residual porosity <3%.

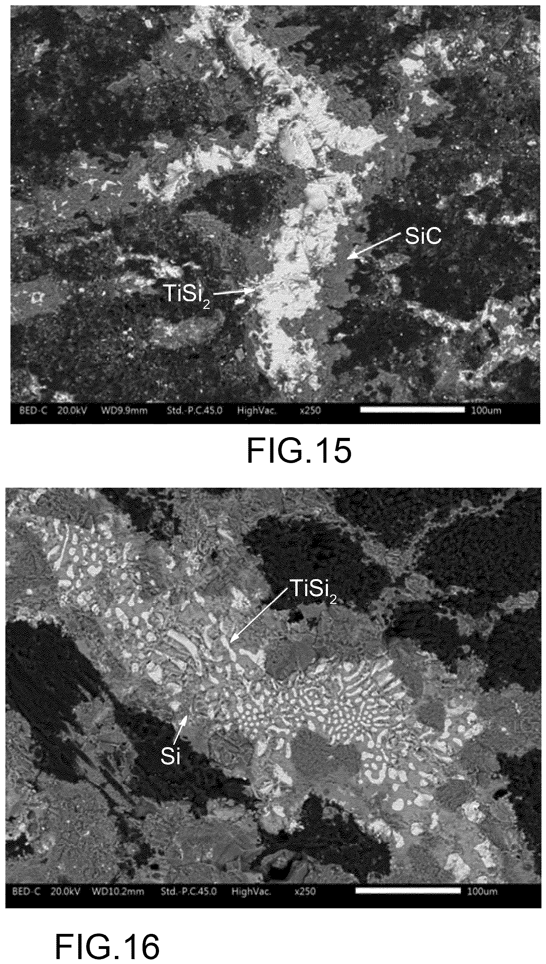

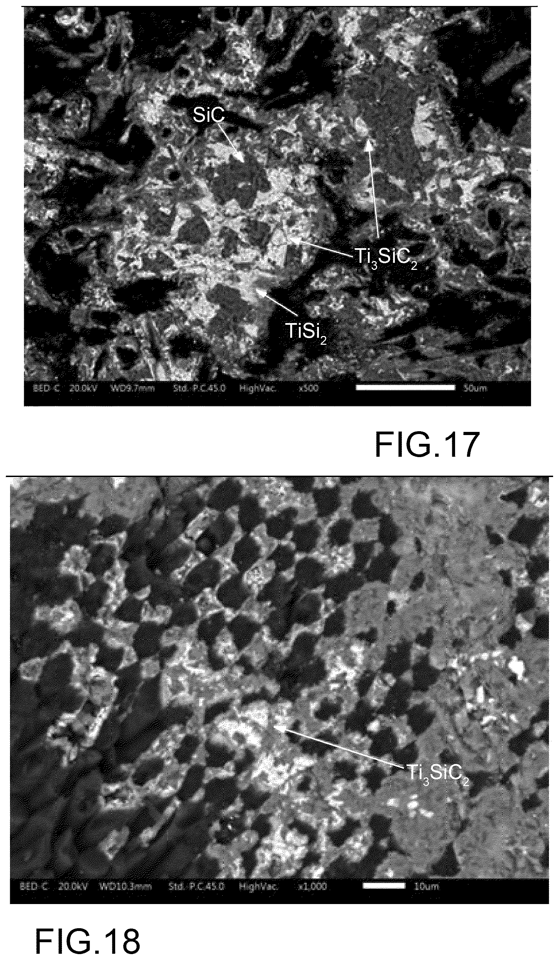

Fig. 15, 16, 17 and 18 are SEM images which show different types of ceramic matrix obtained by infiltrating carbon fiber preforms with Si+Ti according to the invention. Depending upon the % of Ti in the liquid, the ceramic matrix changes, i.e., the phases present after LSI. For example, in the samples that are the object of the SEM images of Fig. 15 and 16, there are the SiC and TiSi2 phases (infiltration liquid with Ti % of between 20 and 30%); in the samples that are the object of the SEM images of Fig. 17 and 18, in addition to the SiC and TiSi2 phases, there is also the Ti3SiC2 phase (infiltration liquid with Ti % of between 30% and 50%) .

### EXEMPLARY EMBODIMENTS

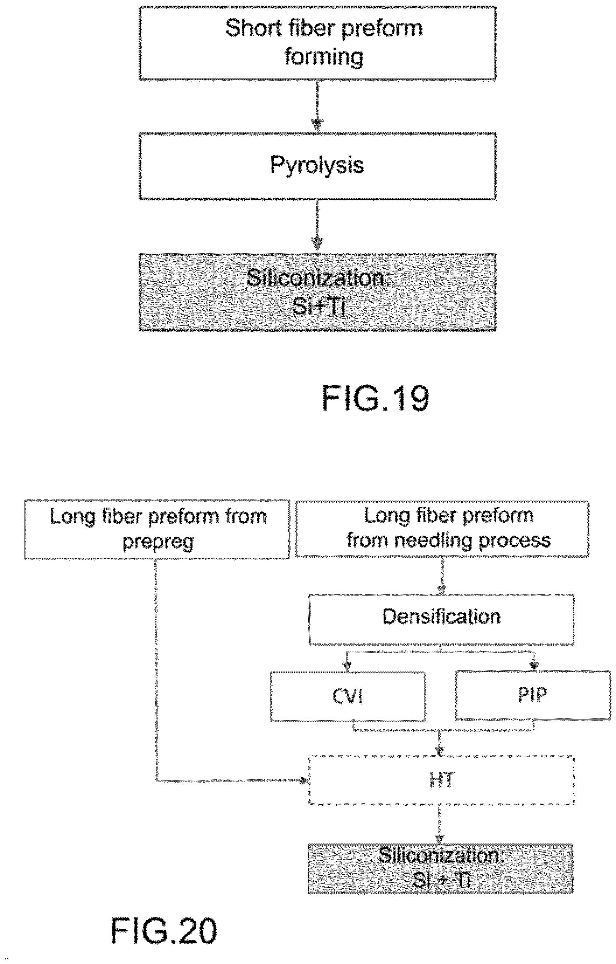

Following the process diagrams of Fig. 19 and 20, samples were made of a ceramic composite reinforced with short or long carbon fibers.

In the case of using short fibers (Fig. 19), once the carbonaceous preform (short fiber; phenolic aggregating resin) had been made and the pyrolysis treatment performed at 900°C, an infiltration with Si+Ti was performed at a temperature of between 1500 and 1700°C and with a vacuum of less than 10 mbar.

In the case of using long fibers (Fig. 20), the carbonaceous preform may be prepared starting from a prepreg fabric or from a fibrous substrate obtained by needling two or more layers of long fibers.

In the first case, the prepreg fabric (being already impregnated with resin) may not be subjected to densification, but may be directly subjected to pyrolysis at 900°C such as to obtain a graphitized long fiber preform.

In the second case, the fibrous substrate (not already being impregnated with resin) was densified by means of a CVI or PIP technique, followed by pyrolysis at 900°C such as to obtain a long graphitized fiber preform.

In both cases the graphitized preform may optionally be subjected to a heat treatment HT (at a temperature greater than 2000°C and with a period of time greater than 5 min). Finally, infiltration with Si+Ti was performed at a temperature comprised between 1500 and 1700°C and with a vacuum of less than 10 mbar.

In both cases, a composite ceramic material was obtained with a compositionally homogeneous ceramic matrix (by homogeneous it is meant to have no phase variations of >2% within different portions of the volume of the material), free of residual silicon, with a density equal to about 2.1-2.6 g/cm3 and an open porosity of less than 3%.

These materials have the advantage, associated with the presence of maxphase and Ti phases and the absence of Si, of having improved behavior in relation to the tribological properties and to wear resistance.

The present invention relates to a composite ceramic material, which in particular is made by the method according to the invention, in particular as described above.

As described in relation to the manufacturing method, the composite ceramic material according to the invention has improved thermo-mechanical properties that make it particularly suitable for use both as a bulk material and as a coating in thermo-mechanical applications in the automotive (brake) and aerospace sectors where materials capable of working at very high temperatures in the presence of aggressive atmospheres are required.

The diagrams in Fig. 21 and 22 show two examples of a production process of a short fiber manufactured product/preform and a long fiber manufactured product/preform, respectively, in which it is envisaged to equip the main body of the manufactured product/preform with a coating layer made of the composite ceramic material according to the invention.

In the case of a short fiber manufactured product/preform, the use of a binder resin (preferably phenolic) is required.

In the case of a long fiber manufactured product/preform, a prepreg fabric (preferably phenolic resin) or a fibrous substrate obtained by needling two or more layers of long fibers may be used.

The various materials may then be further densified by means of PIP or CVI before the LSI process.

The composite ceramic material comprises:
- a SiC-based ceramic matrix;
- fibers, preferably carbon fibers, incorporated into said ceramic matrix.

The fibers may be short fibers or long fibers. Preferably, the short fibers are distributed with a random or predetermined orientation. Preferably, the long fibers are distributed as unidirectionally oriented filaments, in the form of fabrics or incorporated into prepreg.

According to the invention, the ceramic matrix comprises one or more metals, selected from the group consisting of tin, zinc, iron, germanium, titanium, zirconium and manganese, and/or compounds thereof, selected from the group consisting of carbides, silicides, borides and nitrides, MAX phase.

According to one preferred embodiment, the ceramic matrix comprises tin.

Preferably, the content by weight of tin is less than 5% by weight of the total composite ceramic material, preferably less than 2% by weight.

In particular, the tin is in the metallic state and not bound to carbon and silicon.

In particular, the tin is present in the composite ceramic material:
- within fractures as a filler; and/or
- within not very compacted chops; and/or
- at the interface between the fibers and the ceramic matrix.

According to a further preferred embodiment, the ceramic matrix comprises iron and/or the compounds thereof.

Preferably, the content by weight of iron and/or the compounds thereof is comprised between 0.5 and 20% by weight of the total ceramic composite material.

According to a further preferred embodiment, the ceramic matrix comprises titanium.

Preferably, the ceramic matrix of the composite ceramic material comprises SiC, TiSi2, Ti3SiC2 and TiC and is substantially free of silicon segregations.

Advantageously, the ceramic matrix is compositionally homogeneous.

Preferably, the titanium content by weight of the total ceramic composite material is comprised between 0.5 and 25%.

The subject matter of the present invention is a mechanical component, comprising at least one portion having a surface layer consisting of the composite ceramic material according to the invention, and in particular as described above.

In particular, the mechanical component according to the invention may be a component for thermo-mechanical applications in the automotive (brake) and aerospace sectors where materials capable of working at very high temperatures in the presence of aggressive atmospheres are required.

An interesting application is that of braking systems, in particular for the preparation of disks for disk brakes, or in the aerospace sector, the manufacture of rocket nozzles, thermal protection systems, leading edges for airfoils.

The production process diagrams shown in Fig. 21 and 22 are applied in particular in the automotive sector, for example in the production of brake disks with a protective coating.

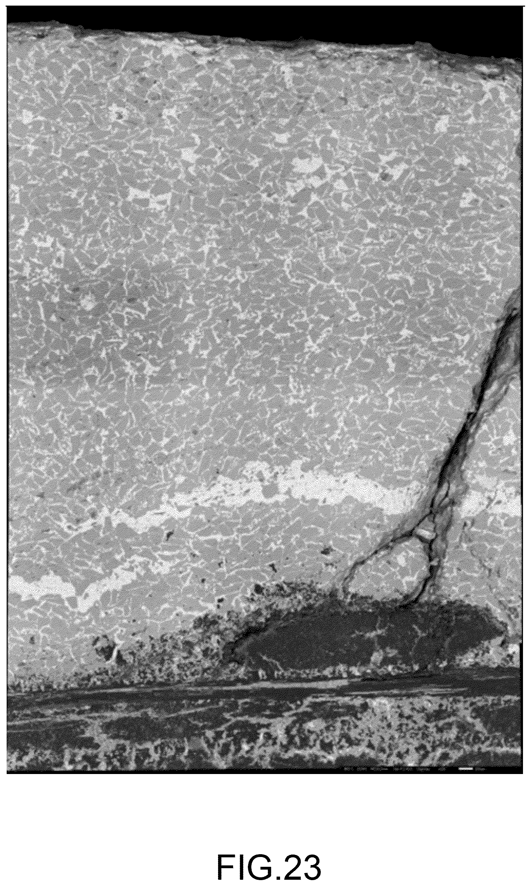

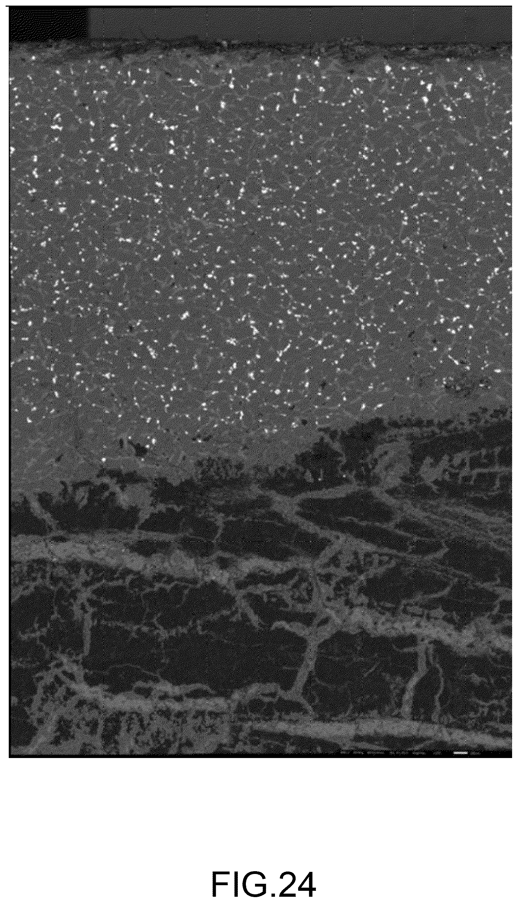

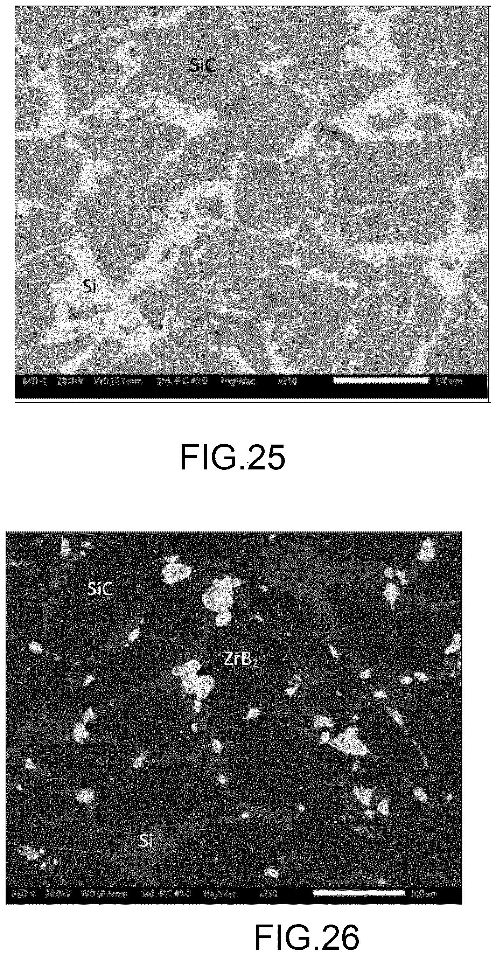

Fig. 23, 24, 25 and 26 are SEM images of coating/coating layers obtained by co-molding using short fiber preforms. A comparison may be made between a coating consisting of only Si-SiC (Fig. 23 and 25) and a coating containing Si-SiC and ZrB2 (Fig. 24 and 26) made according to the present invention. Similarly, different metal powders may be introduced, such as: TiC, TiB2, Sn, Fe, etc.

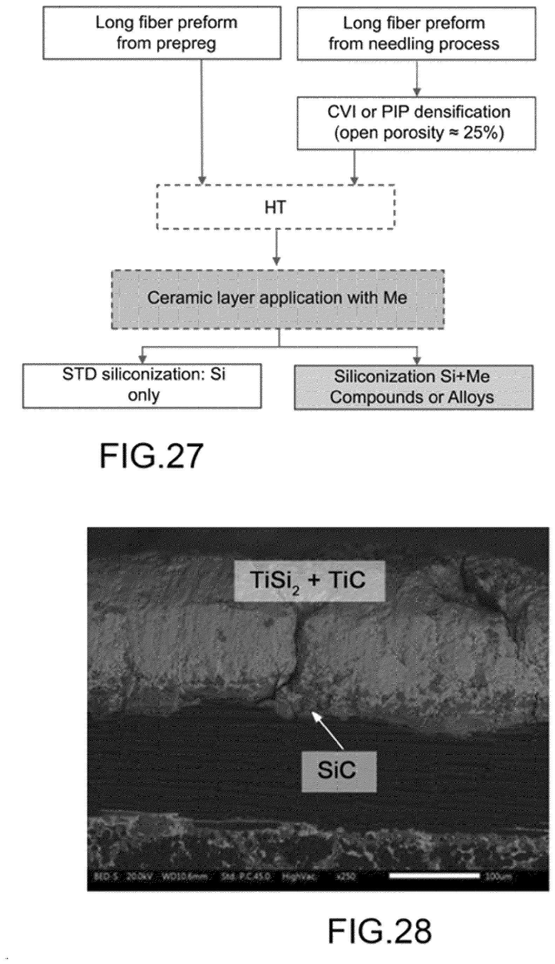

Fig. 27 shows a process diagram for making protective coatings in composite ceramic materials according to the invention on preforms (mainly long fiber) that may find application in the aerospace field. This protective coating leads to improvements in terms of wear and oxidation resistance.

The implementation of this coating, given the very complex shapes of the pieces in the aerospace field, makes it difficult to be realized by means of co-molding. This coating may therefore be implemented by:
- spraying onto the preform;
- spatulating onto the preform;
- native coating during the LSI process.

The introduction of metals (and metal compounds) may take place:
- during the preparation of the coatings, i.e., present in the material that is sprayed or spatulated onto the preform;
- introduced into the infiltrating liquid.

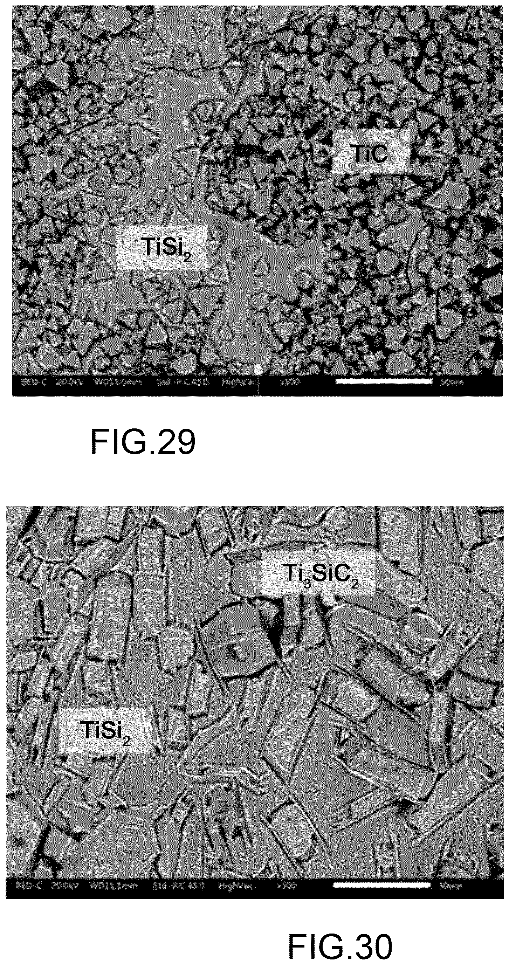

Fig. 28, 29 and 30 show SEM images of coating/coating layers obtained by spraying or spatulating onto long fiber preforms. The image in Fig. 28 refers to the coating on a cross section made on a long fiber sample infiltrated with Si+Ti; Fig. 29 and 30 refer to the surface of the coating.

The invention allows numerous advantages to be obtained, which have already been described in part.

The method according to the invention allows for the manufacture of a composite ceramic material with improved features in terms of mechanical properties and/or thermal properties.

The method according to the invention makes it possible to produce a composite ceramic material by lowering the infiltration temperature using silicon.

The method according to the invention makes it possible to produce a composite ceramic material, reducing, if not eliminating, the segregations of semi-metallic silicon.

The method according to the invention allows for the manufacture of a composite ceramic material having an appropriately engineered ceramic matrix (compositionally homogeneous or graded).

In particular, the method according to the invention makes it possible to make a composite ceramic material, obtaining the following advantages:
- Development of MAX phase;
- Development of anti-wear phases;
- Absence of segregated silicon;
- Increase in thermo-mechanical properties;
- Increased toughness;
- Low infiltration temperatures.

The invention thus conceived therefore achieves its intended objectives.

Obviously, in practice it may also assume different forms and configurations from the one illustrated above, without thereby departing from the present scope of protection.

Furthermore, all details may be replaced with technically equivalent elements, and the dimensions, shapes, and materials used may be any according to the needs.

## Claims

1. Method for making a composite ceramic material, comprising the following operating steps:
a) producing a green body starting from an aggregate of fibers, preferably carbon, and a carbonaceous matrix;
b) subjecting said green body to pyrolysis to produce a porous shaped body;
c) optionally heat-treating said porous shaped body to cause at least partial graphitization of the carbon;
d) infiltrating said porous shaped body with molten silicon thereby obtaining a body made of a composite ceramic material,
**characterized in that** said body made of composite ceramic material comprises one or more metals, selected from the group consisting of tin, zinc, iron, germanium, titanium, zirconium and manganese, and/or compounds thereof, selected from the group consisting of carbides, silicides, borides, nitrides, MAXPhase, wherein the presence of said one or more metals and/or compounds thereof modifies the microstructure of the ceramic material and/or influences the pyrolysis process and/or the silicon infiltration process
and **in that** said one or more metals and/or compounds thereof are introduced:
- in step a) of producing the green body as additives to the fibers and to a resin which forms the carbonaceous matrix; and/or
- in the porous shaped body before step d) of infiltration with silicon by means of physical and chemical infiltration processes; and/or
- in step d) of infiltration with silicon in mixture with the molten silicon.

2. Method according to claim 1, wherein said one or more metals and/or compounds thereof are introduced in step a) of producing the green body as additives to the fibers and to said resin in the form of powders.

3. Method according to claim 1 or 2, wherein said one or more metals and/or compounds thereof are introduced into the porous shaped body before step d) of infiltration with silicon:
- in the form of solutions by means of an impregnation process; or
- as additives of a resin by means of a PIP process.

4. Method according to claim 1, 2 or 3, wherein said fibers may consist of short fibers or long fibers, wherein preferably the short fibers are distributed with a random or predetermined orientation in the green body and wherein preferably the long fibers may be distributed in the green body as unidirectionally oriented filaments, in the form of fabrics or embedded in prepreg.

5. Method according to any one of the preceding claims, wherein said green body is made as a coating layer of a main body, preferably said aggregate of fibers and said carbonaceous matrix being co-molded with said main body or sprayed or spatulated onto said main body.

6. Method according to any one of the preceding claims, wherein said body made of composite ceramic material comprises tin.

7. Method according to claim 6, wherein the tin is introduced in the form of a powder in step a) of producing the green body as an additive to the aggregate of fibers and binder resin.

8. Method according to claim 7, wherein the tin content by weight is less than 20% by weight of the total components used to produce said green body, preferably comprised between 2 and 8% by weight.

9. Method according to claim 7 or 8, wherein in the composite ceramic material the tin is in the metallic state, not bonded to carbon and silicon, preferably the tin is present in the composite ceramic material:
- inside cracks as a filler; and/or
- inside gaping chops i.e. not compacted; and/or
- at the interface between fibers and silicon carbide structures formed following the infiltration with silicon.

10. Method according to any one of claims 7 to 9, wherein in step d) of infiltration with molten silicon said porous shaped body is infiltrated with molten silicon at a temperature lower than 1500°C, preferably not lower than 1450°C, wherein preferably the step d) of infiltration with molten silicon is performed under vacuum.

11. Method according to any one of claims 7 to 10, wherein the tin content by weight is less than 5%, preferably less than 2% by weight of the total of the composite ceramic material.

12. Method according to any one of the preceding claims, wherein said body made of composite ceramic material comprises iron and/or compounds thereof.

13. Method according to claim 12, wherein the iron and/or compounds thereof are introduced into the porous shaped body before the step d) of infiltration with silicon and before said optional step c) of heat treatment:
- in the form of solutions by means of an impregnation process, preferably under vacuum; or
- as additives of a resin by means of a PIP process, preferably under vacuum,
wherein the iron and the compounds thereof act as catalysts for carbon graphitization.

14. Method according to claim 13, wherein the content by weight of iron and/or compounds thereof is comprised between 0.5 and 20% by weight of the total of the composite ceramic material.

15. Method according to claim 12, wherein the iron and/or compounds thereof are introduced into the porous shaped body during step d) of infiltration with silicon in mixture with the molten silicon, wherein preferably the iron is present in the ceramic matrix of the composite ceramic material in the form of FeSi2 alloy, FeSi, or other Fe-Si compounds depending upon the introduced percentage of iron by weight, wherein preferably the mixture of molten silicon and iron used in step d) has the following composition: 40-95% by weight of Si, 5 - 60% by weight of Ti and 0 - 40% by weight of C, wherein preferably the content by weight of iron and is less than 20% by weight of the total of the composite ceramic material.

16. Method according to any one of the preceding claims, wherein said body made of composite ceramic material comprises titanium.

17. Method according to claim 16, wherein the titanium is present in the ceramic matrix of the composite ceramic material in the form of TiSi2, Ti3SiC2 and TiC.

18. Method according to claim 16 or 17, wherein the titanium is introduced into the porous shaped body during step d) of infiltration with silicon in mixture with the molten silicon, wherein preferably the mixture of molten silicon and titanium used in step d) has the following composition: 35-95% by weight of Si, 5 - 50% by weight of Ti and 0 - 40% by weight of C.

19. Method according to claim 17 or 18, wherein the ceramic matrix of the composite ceramic material comprises SiC, TiSi2, Ti3SiC2 and TiC and is substantially free of silicon segregations.

20. Method according to any one of claims 16 to 19, wherein the titanium content by weight is comprised between 0.5 and 25% by weight of the total of the composite ceramic material.

21. Composite ceramic material, comprising:
- a ceramic matrix based on SiC;
- fibers, preferably carbon, incorporated into said ceramic matrix,
wherein preferably said fibers are short fibers distributed with random orientation or are long fibers which may be distributed as unidirectionally oriented filaments or in the form of fabrics,
**characterized in that** said ceramic matrix comprises one or more metals selected from the group consisting of tin, zinc, iron, germanium, titanium, zirconium and manganese and/or compounds thereof selected from the group consisting of carbides, silicides, borides and nitrides.

22. Composite ceramic material according to claim 21, wherein said ceramic matrix comprises tin, wherein preferably the content by weight of tin is less than 5% by weight of the total of the composite ceramic material, preferably less than 20, wherein preferably the tin is in the metallic state, not bonded to carbon and silicon, wherein preferably the tin is present in the composite ceramic material:
- inside cracks as a filler; and/or
- inside gaping, porous chops; and/or
- at the interface between fibers and ceramic matrix.

23. Composite ceramic material according to any one of claims 21 to 22, wherein said ceramic matrix comprises iron and/or compounds thereof, wherein preferably the content by weight of iron and or compounds thereof is comprised between 0.5 and 20% by weight of the total of the composite ceramic material.

24. Composite ceramic material according to any one of claims 21 to 23, wherein said ceramic matrix comprises titanium, wherein preferably the ceramic matrix of the composite ceramic material comprises SiC, TiSi2, Ti3SiC2 and TiC and is substantially free of silicon segregations, wherein preferably the content by weight of titanium of the total of the composite ceramic material is comprised between 0.5 and 25%.

25. Mechanical component, **characterized in that** it comprises at least one portion having a surface layer consisting of the composite ceramic material according to one or more of claims 21 to 24, wherein preferably said surface layer made of composite ceramic material is co-molded or sprayed or spatulated onto the main body of the mechanical component itself.
